# EUROPÄISCHE PATENTSCHRIFT

(11) **EP 1 135 614 B1**
(45) Veröffentlichungstag und Bekanntmachung des Hinweises auf die Patenterteilung: **28.05.2003**
(21) Anmeldenummer: 99958035.0
(22) Anmeldetag: 13.11.1999
(51) Int. Cl.: F15B 13/01, F16K 15/18

(54) **ENTSPERRBARES RÜCKSCHLAGVENTIL FÜR SEHR HOHE SYSTEMDRÜCKE**
RELEASABLE CHECK VALVE FOR VERY HIGH SYSTEM PRESSURES
CLAPET DE NON RETOUR PILOTE DESTINE A UN SYSTEME DE PORTES PRESSIONS

(30) Priorität: 04.12.1998 DE 19856018
(43) Veröffentlichungstag der Anmeldung: 26.09.2001
(73) Patentinhaber: Bosch Rexroth AG, 97816 Lohr am Main (DE)
(72) Erfinder: DANTLGRABER, Jörg, D-97816 Lohr/Main (DE); MÜLLER, Falk, D-97816 Lohr/Main (DE)
(86) Internationale Anmeldenummer: EP9908756
(87) Internationale Veröffentlichungsnummer: WO00034664

(56) Entgegenhaltungen:
- DE-A- 3 913 460
- DE-A- 19 714 505
- DE-U- 9 405 450
- US-A- 5 351 601

## Beschreibung

Die Erfindung geht aus von einem entsperrbaren Rückschlagventil, das für sehr hohe Systemdrücke verwendbar sein soll und das die Merkmale aus dem Oberbegriff des Anspruchs 1 aufweist.

Rückschlagventile erlauben ohne weiteres einen Druckmitteldurchfluß von einem ersten Ausgang zu einem zweiten Ausgang, wobei das Schließglied durch eine von dem Druck im ersten Ausgang erzeugte Kraft gegen den vom im zweiten Ausgang herrschenden Druck ausgeübte Kraft und gegen die Kraft der Schließfeder von einem Sitz abgehoben wird. Da das Schließglied üblicherweise an gleich großen Flächen von den Drücken beaufschlagt wird, stellt sich im ersten Ausgang ein Druck ein, der um eine der Kraft der Schließfeder äquivalente Druckdifferenz höher als der Druck im zweiten Ausgang ist. Die Schließfeder ist nur schwach, um die Verluste über das Ventil gering zu halten, es sei denn man will das Druckmittel im ersten Ausgang bewußt anstauen. Die Durchströmung eines Rückschlagventils in Richtung vom zweiten Ausgang zum ersten Ausgang ist nur durch zusätzliche Maßnahmen möglich, durch die ein entsperrbares Rückschlagventil geschaffen wird. Es ist dann ein Aufstoßteil vorhanden, das am Schließglied in Öffnungsrichtung angreifen und es gegen die Kraft der Schließfeder und gegen die Druckdifferenz zwischen dem ersten und zweiten Ausgang vom Sitz abheben kann.

Aus der DE 197 14 505 A 1 ist ein entsperrbares Rückschlagventil geoffenbart, das alle Merkmale aus dem Oberbegriff des Anspruchs 1 aufweist. Als Beispiel für eine Verwendung eines solchen Rückschlagventils wird in der genannten Schrift das Innenhochdruckumformen von rohrartigen Halbzeugen erwähnt. Das gezeigte Rückschlagventil besitzt ein Ventilgehäuse mit einer durchgehenden Aufnahmebohrung, die gestuft ist und sich im wesentlichen aus drei Abschnitten zusammensetzt. In den zwei äußeren Abschnitten ist der Durchmesser der Aufnahmebohrung größer als in einem mittleren Abschnitt, in den die beiden äußeren Abschnitte in in Radialebenen liegenden Stufen übergehen. In die beiden äußeren Abschnitte sind dem Systemdruck ausgesetzte hochfeste Einsätze und der Führung eines Aufstoßkolbens dienende Einsätze eingebracht. Der mittlere Abschnitt der Aufnahmebohrung ist durch einen Kolbenbund des Aufstoßkolbens in zwei Ringräume aufgeteilt, von denen der eine zur Steuerung des Rückschlagventils über ein Pilotventil mit Steuerdruck beaufschlagt oder zu einem Tank entlastet werden kann und der andere dauernd mit einem Druckmittetreservoir verbunden ist und eine Rückstellfeder für den Aufstoßkolben enthält.

Es ist festgestellt worden, daß bei dem bekannten Rückschlagventil der Aufstoßkolben nicht immer in dem gewünschten Maße leichtgängig ist. Außerdem war die Dichtwirkung und die Lebensdauer verschiedener Dichtanordnungen zwischen dem Aufstoßkolben und den Einsätzen nicht immer unproblematisch.

Der Erfindung liegt somit die Aufgabe zugrunde, ein entsperrbares Rückschlagventil mit den Merkmalen aus dem Oberbegriff des Anspruchs 1 so weiterzuentwickeln, daß der Aufstoßkolben nicht über das aufgrund der Reibkräfte an den Dichtungen zu erwartende Maß hinaus schwergängig ist und eine hohe Dichtwirkung und Lebensdauer der Dichtungen möglich ist.

Diese Aufgabe wird bei einem entsperrbaren Rückschlagventil gemäß dem Oberbegriff des Anspruchs 1 nach der Erfindung dadurch gelöst, daß dieses Ventil zusätzlich mit den Merkmalen aus dem kennzeichnenden Teil des Anspruchs 1 ausgestattet ist. Die Erfindung beruht zunächst auf der Erkenntnis, daß eine Schwergängigkeit des Aufstoßkolbens, eine mangelhafte Wirkung und eine beschränkte Lebensdauer der Dichtungen bei dem bekannten Ventil durch Fluchtungsfehler bedingt sind. Diese wiederum gehen darauf zurück, daß die die Einsätze aufnehmenden Abschnitte der Aufnahmebohrung von verschiedenen Seiten des Ventilgehäuses aus bearbeitet werden. Gemäß der Erfindung besitzt nun die Aufnahmebohrung im Bereich der Einsätze und zwischen diesen, abgesehen von eventuell vorhandenen, in axialer Richtung kurzen Eindrehungen, im wesentlichen gleichen Durchmesser, so daß sie von nur einer Seite des Ventilgehäuses aus, also ohne Wechsel der Position des Ventilgehäuses oder des Werkzeugs, bearbeitet werden kann. Axial zwischen zwei Einsätzen ist eine Abstandsbuchse angeordnet, die auch bei gleich bleibendem Durchmesser der Aufnahmebohrung für einen festen Abstand zwischen zwei Einsätzen auf verschiedenen Seiten des Kolbenbundes sorgt. Zugleich werden durch die Abstandsbuchse und den Kolbenbund die zwei Ringräume auf den beiden Seiten des Kolbenbundes vorzugsweise unter Verwendung einer zusätzlichen Dichtung fluidisch voneinander getrennt.

Vorteilhafte Ausgestaltungen eines erfindungsgemäßen entsperrbaren Rückschlagventils kann man den Unteransprüchen entnehmen.

Bevorzugt sind, wie dies im Anspruch 2 beschrieben ist, die beiden unmittelbar an den beiden Stirnseiten der Abstandbuchse anliegenden Einsätze identisch zueinander, so daß die Teilevielfalt gering ist.

Bei einem erfindungsgemäßen entsperrbaren Rückschlagventil können sich auf einer Seite der Abstandsbuchse zwei Einsätze befinden, was z.B. für die Montage von Dichtungen vorteilhaft ist. Wird nun ein erfindungsgemäßes entsperrbares Rückschlagventil bei sehr hohen Systemdrücken, die z.B. beim Innenhochdruckumformen 4.000 oder 6.000 bar betragen können, verwendet, so kommt es darauf an, daß die Trennfugen zwischen den beiden Einsätzen von Druck entlastet sind, damit sich dort nicht der hohe Systemdruck aufbauen kann. Dieser würde nämlich an den einander zugewandten Stirnseiten der radial relativ großen Einsätze eine solche Kraft erzeugen, daß die Gefahr eines Auseinanderreißens des Ventils bestünde. In dem Fluidpfad zur Druckentlastung liegt gemäß Anspruch 3 auch ein Ringkanal zwischen den Einsätzen und dem Ventilgehäuse. Es kommt dann darauf an, daß sich die Trennfuge zwischen den beiden Einsätzen im Bereich des Ringkanals befindet. Eine Kontrolle ist dann gemäß Anspruch 3 auf einfache Weise dadurch möglich, daß der äußerste der Einsätze auf der einen Seite der Abstandsbuchse eine Kante oder Fläche besitzt, die in der vorgesehenen Lage der Einsätze zu dem Ringkanal bündig zu einer Stirnfläche des Ventilgehäuses liegt.

Durch die Ausgestaltung gemäß Anspruch 5 wird erreicht, daß die Ringräume auf den beiden Seiten des Kolbenbundes nicht von den beiden Stirnseiten an den Endabschnitten des Aufstoßkolbens her mit Höchstdruck beaufschlagt werden können. Dazu sind zwei axial beabstandete Dichtungen vorgesehen, zwischen denen der Spalt zwischen den Endabschnitten des Aufstoßkolbens und einem Einsatz über einen Leckölanschluß von Druck entlastet ist. Die besondere Ausgestaltung dieser Druckentlastung gemäß Anspruch 5 gewährleistet, daß ein Teil der Dichtungsanordnung in der offenen Ausdrehung des zweiten Einsatzes an einer glatten, keine Unstetigkeiten aufweisenden Fläche des ersten Einsatzes axial anliegen kann.

Sonstige vorteilhafte Weiterbildungen eines erfindungsgemäßen entsperrbaren Rückschlagventils sind Gegenstand weiterer Unteransprüche.

Ein Ausführungsbeispiel eines erfindungsgemäßen entsperrbaren Rückschlagventils sowie das Prinzip einer hydraulischen Schaltung zur Innenhochdruckumformung, innerhalb der ein erfindungsgemäßes Rückschlagventil verwendbar ist, sind in der Zeichnung dargestellt. Anhand der Figuren dieser Zeichnung wird die Erfindung nun näher erläutert.

Es zeigen
- Figur 1: das hydraulische Schaltbild und
- Figur 2: einen Längsschnitt durch das Ausführungsbeispiel eines erfindungsgemäßen Rückschlagventils.

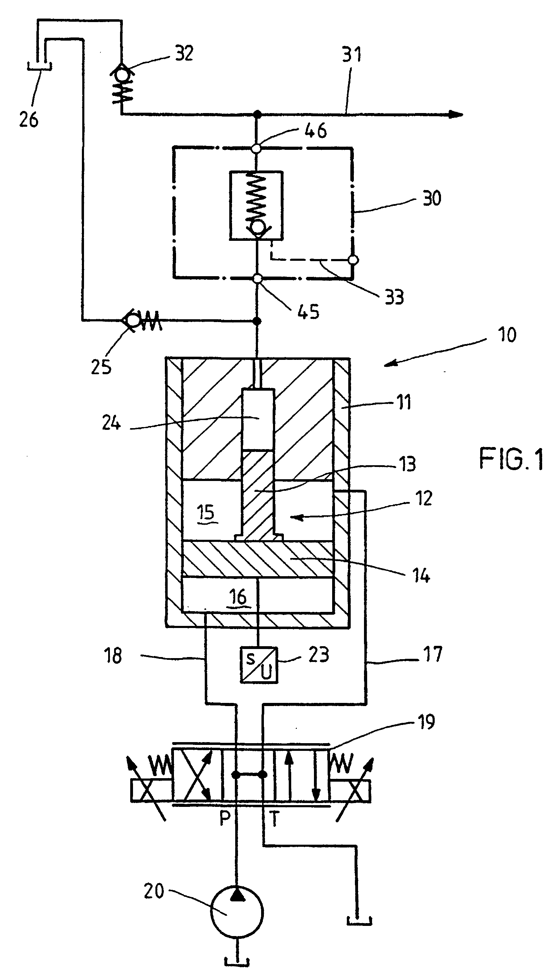

Das Schaltbild nach Figur 1 stellt nur einen Ausschnitt aus dem hydraulischen Teil einer Innenhochdruckumformungsanlage dar. Wichtigstes Teil der Hydraulik einer solchen Anlage ist ein Druckübersetzer 10, der in einem mehrteiligen Gehäuse 11 einen Differentialkolben 12 enthält, dessen Flächenverhältnis das Druckübersetzungsverhältnis bestimmt. An einem sekundärseitigen Kolbenabschnitt 13 ist der Durchmesser des Differentialkolbens 12 wesentlich kleiner als an einem primärseitigen Kolbenabschnitt 14. Letzterer teilt einen Innenraum des Gehäuses 11 in einen Ringraum 15 und einen Zylinderraum 16 auf. Die beiden Räume sind über Arbeitsleitungen 17 und 18 mit einem proportional verstellbaren Wegeventil 19 verbunden, das in seiner mittleren Ruhestellung beide Arbeitsleitungen und damit den Ringraum 15 und den Zylinderraum 16 über einen Tankanschluß T mit einem Tank verbinden. In einer ersten Arbeitsstellung des Wegeventils 19 wird der Ringraum 15 über einen Pumpenanschluß P mit einer Hydropumpe 20 verbunden, während der Zylinderraum 16 mit dem Tank verbunden bleibt. In der anderen Arbeitsstellung des Wegeventils 19 ist der Zylinderraum 16 mit der Hydropumpe und der Ringraum 15 mit dem Tank verbunden.

Ein Weggeber 23 erfaßt die Position des Differentialkolbens 12 bezüglich des Gehäuses 11.

Der Raum 24 vor der Stimseite des sekundärseitigen Kolbenabschnitts 13 ist zum einen über ein einfaches Rückschlagventil 25, das zu ihm hin öffnet, mit einem Vorratsbehälter 26 verbunden, der eine Druckflüssigkeit auf Wasserbasis enthält. Zum andern ist an den Druckraum 24 ein erfindungsgemäßes entsperrbares Rückschlagventil 30 angeschlossen, durch das hindurch ohne weiteres Druckmittel aus dem Druckraum 24 zu einer Leitung 31 fließen kann, die an das umzuformende Halbzeug anschließbar ist. Die Leitung 31 ist außerdem über ein zu ihr hin öffnendes Rückschlagventil 32 mit den Vorratsbehälter 26 verbunden. Im Betrieb wird das Halbzeug über die Leitung 31 und das Rückschlagventil 32 aus dem Vorratsbehälter 26 mit Druckflüssigkeit gefüllt, wobei zwischen dem Vorratsbehälter 26 und dem Rückschlagventil 32 auch noch eine Pumpe angeordnet sein kann, die eine Befüllung bis zu einem gewissen Druck bewirkt. Dann wird das Wegeventil 19 in seine zweite Arbeitsstellung gebracht, in der dem Zylinderraum 16 des Druckübersetzers 10 von der Pumpe 20 Hydrauliköl zugeführt wird. Der Differentialkolben 12 bewegt sich, nach Figur 1 betrachtet, nach oben und verdrängt Druckflüssigkeit aus dem Druckraum 24 über das entsperrbare Rückschlagventil 30 in die Leitung 31, so daß sich der Druck im zu verformenden Halbzeug erhöht. Je nachdem wie groß das Volumen des Halbzeugs, die Zunahme des Volumens durch die Verformung und die Höhe des Enddruckes sind, ist einer oder sind mehrere Hübe des Differentialkolbens 12 notwendig. Für einen zweiten Hub wird das Wegeventil 19 in seine erste Arbeitsstellung gebracht, so daß der Differentialkolben 12 nach unten fährt und über das Rückschlagventil 25 aus dem Vorratsbehälter 26 Druckflüssigkeit in den Druckraum 24 angesaugt wird. Nach abermaligem Umschalten des Wegeventils 19 wird wiederum aus dem Druckraum 24 Druckflüssigkeit über das Rückschlagventil 30 in die Leitung 31 gedrückt.

Nach vollendeter Verformung und Kalibrierung des Werkstücks wird das Rückschlagventil 30 durch Anlegen eines Steuerdrucks an einen Steuerkanal 33 entsperrt, so daß der Raum innerhalb des Werkstücks und die Leitung 31 durch Zurückfahren des Differentialkolbens 12 dekomprimiert werden können.

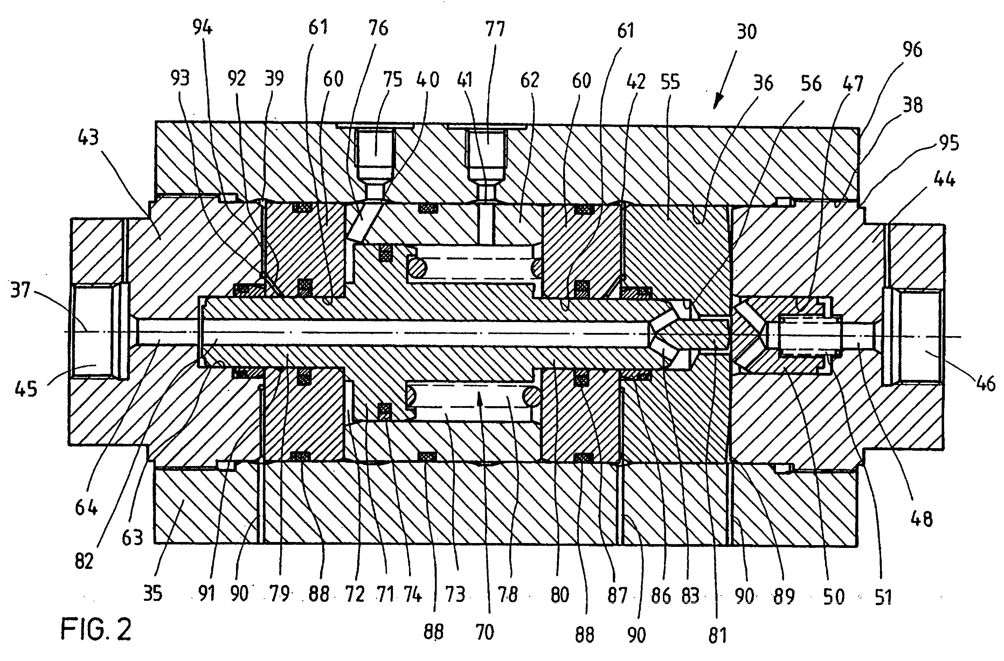

Der Aufbau und die Wirkungsweise des Rückschlagventils 30 gehen näher aus Figur 2 hervor. Das dort gezeigte Ausführungsbeispiel besitzt erfindungsgemäß ein Ventilgehäuse 35, durch das eine Aufnahmebohrung 36 hindurchgeht, deren Achse als Ventilachse 37 bezeichnet sei. Die Aufnahmebohrung 36 besitzt abgesehen von zwei mit einem Innengewinde versehenen Abschnitten 38 an ihren beiden Enden und abgesehen von flachen Eindrehungen 39, 40, 41 und 42 weiter innen durchgehend den gleichen Durchmesser und kann im Bereich dieses gleichen Durchmessers von nur einer Seite des Ventilgehäuses 35 aus bearbeitet werden. In die Aufnahmebohrung 36 sind insgesamt sechs Teile axial gegeneinander verspannt eingesetzt. Zunächst sind in die Abschnitte 38 der Aufnahmebohrung 36 hochfeste Einsätze 43 und 44 eingeschraubt, von denen jeder in der Ventilachse 37 eine Gewindebohrung 45 bzw. 46 hat, die als erster bzw. zweiter Ausgang des Ventils dienen und an die jeweils eine Druckleitung angeschlossen werden kann. Die Einsätze 43 und 44 tauchen über die Abschnitte 38 in den Bereich gleich bleibenden Durchmessers der Aufnahmebohrung 36 hinein und sind darin zentriert. Der Einsatz 44 besitzt eine nach innen offene Sackbohrung 47, die über einen engeren Kanal 48 mit der Gewindebohrung 46 verbunden ist und die ein Schließglied 50 aufnimmt und führt, das von einer schwachen Schließfeder 51 in Richtung aus der Sackbohrung 47 heraus belastet ist. Dem Einsatz 44 folgt axial ein ebenfalls hochfester, scheibenförmiger Einsatz 55 mit einem zweifach gestuften zentralen Durchgang 56. Um den engsten Abschnitt des zentralen Durchgangs herum dient der Einsatz 55 als Sitz für das Schließglied 50. Auf den Einsatz 55 folgen eine Scheibe 60 mit einem zentralen Durchgang 61, dann eine Abstandsbuchse 62, deren Innendurchmesser wesentlich größer als der Durchmesser des zentralen Durchgangs 61 in der Scheibe 60 ist, dann eine weitere Scheibe 60 mit einem zentralen Durchgang 61, die zur ersteren Scheibe 60 entgegengesetzt montiert ist, und dann der Einsatz 43. Letzterer besitzt ähnlich wie der Einsatz 44 eine nach innen hin offene Sackbohrung 63, die jedoch weniger tief als die Sackbohrung 47 ist und auch einen kleineren Durchmesser hat. Dieser Durchmesser stimmt mit dem Durchmesser der zentralen Durchgänge 61 in den Scheiben 60 und mit dem Durchmesser des mittleren Abschnitts des zentralen Durchgangs im Einsatz 55 überein. Auch ist die Sackbohrung 63 über einen im Durchmesser engeren Kanal 64 mit der Gewindebohrung 55 verbunden.

Alle Einsätze 43, 44, 55, 60 und 62 sind durch die Aufnahmebohrung 36 zentriert.

Im Innern der Einsätze 55, 60 und 43 sowie im Innern der Abstandbuchse 62 ist ein Aufstoßkolben 70 aufgenommen, mit dessen Hilfe das Schließglied 50 gegen die Kraft der Schließfeder 51 und gegen eine vom Druck im zweiten Ausgang 46 des Ventils erzeugte Kraft von seinem Sitz abgehoben werden kann.

Der Aufstoßkolben besitzt einen sich innerhalb der Abstandbuchse 62 befindlichen Kolbenbund 71, der den von den Scheiben 60 und der Abstandsbuchse 62 umschlossenen Raum in zwei Ringräume 72 und 73 aufteilt. Durch eine Dichtanordnung 74 im Kolbenbund 71 sind die beiden Ringräume gegeneinander abgedichtet. Der Ringraum 72 kann über einen Außenanschluß 75 und mithilfe eines nicht näher dargestellten Pilotventils mit einem Steuerdruck beaufschlagt oder von Druck entlastet werden. In dem Strömungspfad zwischen dem Außenanschluß 75 und dem Ringraum 72 liegen die Ausdrehung 40 des Ventilgehäuses 35 und eine Schrägbohrung 76 in der Abstandsbuchse 62. Der andere Ringraum 73 ist für einen Volumenausgleich und zum Abführen von Lecköl über einen zweiten Außenanschluß 77 mit einem Ölbehälter verbunden und nimmt außerdem eine Rückstellfeder 78 für den Aufstoßkolben 70 auf. Auf beiden Seiten des Kolbenbundes 71 besitzt der Aufstoßkolben wellenzapfenartige Endabschnitte 79 und 80, mit denen er durch die zentralen Durchgänge 61 der Scheiben 60 hindurch und in die Sackbohrung 63 des Einsatzes 43 bzw. in den zentralen Durchgang 56 des Einsatzes 55 eintaucht. Zum Schließglied 50 hin ist der eine Endabschnitt 80 durch einen Finger 81 verlängert, der durch den engsten Abschnitt des zentralen Durchgangs 56 des Einsatzes 55 hindurch das Schließglied 50 beaufschlagen kann. In der gezeigten Ruhelage des Aufstoßkolbens 70 besteht ein geringer Abstand zwischen dem Finger 81 und dem Schließglied 50. Der Strömungspfad zwischen den Ausgängen 45 und 46 des Ventils führt axial durch den Aufstoßkolben 70 hindurch, der dazu eine lange Axialbohrung 82, die sich in die Sackbohrung 63 des Einsatzes 43 hinein öffnet, und mehrere kleine Schrägbohrungen 83 am Fuße des Fingers 81 aufweist.

In dem axial zur einen Scheibe 60 hin offenen weitesten Abschnitt des zentralen Durchgangs 56 des Einsatzes 55 ist eine Höchstdruckdichtung 86 aufgenommen, die vom Höchstdruck axial an eine glatte ohne Unterbrechung umlaufende Fläche der Scheibe 60 angedrückt wird, aber natürlich auch radial zum Aufstoßkolben 70 hin wirkt. Radial wirkt auch eine Dichtung 87, die etwa mittig in einer zum Endabschnitt 80 hin offenen Ringnut der Scheibe 60 aufgenommen ist. Gleiche Dichtungen 86 und 87 befinden sich im Einsatz 43 und in der anderen Scheibe 60. Weitere Dichtungen 88 befinden sich außen an den Scheiben 60 zwischen dem Anschluß 75 und der Ausdrehung 39 des Ventilgehäuses sowie zwischen dem Anschluß 77 und der Ausdrehung 42 des Ventilgehäuses und außen an der Abstandsbuchse 62 zwischen den beiden Ausdrehungen 40 und 41.

Bei dem gezeigten Ventil sind die Trennfugen zwischen der einen Scheibe 60 und dem Einsatz 43 sowie zwischen der anderen Scheibe 60 und dem Einsatz 55 sowie zwischen dem Einsatz 55 und dem Einsatz 44 von Druck entlastet. Für die Druckentlastung zwischen den beiden Einsätzen 55 und 44 ist die dem Einsatz 44 zugewandte Stirnseite des Einsatzes 55 im Abstand zur Ventilachse 37 nach außen hin leicht konisch ausgebildet, so daß einerseits zur radialen Abdichtung die Einsätze 44 und 45 weit innen stramm aneinander liegen können und andererseits ein in seiner axialen Ausdehnung radial nach außen hin zunehmender Ringraum 89 geschaffen ist, aus dem Leckageöl über eine Gehäusebohrung 90 abgeführt wird. Für die Druckentlastung zwischen den Scheiben 60 und den Einsätzen 43 und 55 weisen die Scheiben 60 zwischen der Dichtung 87 und ihrer dem Einsatz 43 bzw. dem Einsatz 55 zugekehrten Stirnseite im zentralen Durchgang 61 eine axial kurze und flache Ringnut 91 auf, von der eine Schrägbohrung 92 ausgeht, die in einem radial geringen Abstand zu der Dichtung 86 an der dem Einsatz 43 bzw. dem Einsatz 55 zugewandten Stimseite einer Scheibe 60 erscheint und dort zu einer im Einsatz 43 bzw. im Einsatz 55 ausgebildeten Ringnut 93 offen ist. Von der Ringnut 93 führen einer oder mehrere radiale Kanäle kleinen Durchmessers nach außen zu der Ausdrehung 39 bzw. 42 des Ventilgehäuses 35, aus denen wiederum durch Gehäusebohrungen 90 Lecköl abgeführt werden kann. Somit sind die Scheiben 60 nirgends dem in den Ausgängen 45 und 46 des Ventils möglichen Höchstdruck ausgesetzt und können hinsichtlich der Materialauswahl ganz auf ihre Funktion als Führungen für den Aufstoßkolben 70 abgestimmt werden. Sie sind vornehmlich aus einer Kupferberylliumlegierung hergestellt. Die Einsätze 43, 44 und 55 dagegen sind im Betrieb durch den Höchstdruck belastet und deshalb aus einem hochfesten Material hergestellt. Die Passung zwischen den Endabschnitten 79 und 80 des Aufstoßkolbens und den Einsätzen 43 und 55 ist so gewählt, daß die Führung des Aufstoßkolbens 70 in den Scheiben 60 stattfindet. Dabei ist ein Verkanten und Klemmen des Aufstoßkolbens 70 so gut wie ausgeschlossen, da die Scheiben 60 in einem Bereich der Aufnahmebohrung 36 zentriert sind, der in einem Arbeitsgang in derselben Aufspannung des Ventilgehäuses und unter Beibehaltung der Lage des Werkzeugs bearbeitet worden ist.

Die Dichtungen 87 und 88 in der Scheibe 60 zwischen der Abstandsbuchse 62 und dem Einsatz 55 dichten Räume gegeneinander ab, in denen im wesentlichen gleicher Druck herrscht. Ihre Funktion besteht im wesentlichen darin, verschiedene Druckflüssigkeiten voneinander zu trennen. Der Ringraum 73 ist nämlich üblicherweise mit Öl gefüllt, während das für die Hochdruckumformung benutzte Druckmittel Wasser ist.

Der Einsatz 44 besitzt eine Fläche 95, die bei der Montage des Ventils in Flucht mit einer Stirnfläche 96 des Ventilgehäuses gebracht wird. Damit ist sichergestellt, daß die Trennfugen zwischen den Einsätzen zu den Eindrehungen 39 und 42 bzw. zu einer Bohrung 90 hin offen und druckentlastet sind. Auch der Einsatz 43 kann so gestaltet sein, daß eine Fläche an ihm bei ordnungsgemäßer axialer Lage der Einsätze im Ventilgehäuse 35 mit der anderen Stirnfläche des Ventilgehäuses fluchtet.

Bei Verwendung des in Figur 2 gezeigten entsperrbaren Rückschlagventils in der hydraulischen Schaltung nach Figur 1 ist der erste Ausgang 45 mit dem Druckraum 24 des Druckübersetzers 10 und der zweite Ausgang 46 mit der Leitung 31 verbunden. Wenn der Druckübersetzer Wasser aus dem Druckraum 24 verdrängt, fließt dieses über die Kanäle 64, 82, 83, 56, über das von seinem Sitz abgehobene Schließglied 50 und über den Kanal 48 im Einsatz 44 zum zweiten Ausgang 46. Für die schon erwähnte Dekompression des flüssigen Umformmittels wird der Ringraum 72. über den Außenanschluß 75 mit Steuerdruck beaufschlagt, so daß sich der Aufstoßkolben auf das Schließglied 50 zu bewegt und dieses von seinem Sitz abhebt. Das Abheben geschieht dabei gegen die Kraft der Rückstellfeder 78 und gegen eine Druckkraft, die durch eine eventuelle Druckdifferenz zwischen den Ausgängen 45 und 46 und durch unterschiedliche Angriffsflächen für die Drücke in den Ausgängen 45 und 46 am Schließglied 50 bedingt ist, und gegen die praktisch vernachlässigbar kleine Kraft der Schließfeder 51. Die Druckkraft kann zwar durch eine druckgesteuerte Bewegung des Differentialkolbens 12 zu Beginn praktisch zu null gemacht werden. Allerdings muß bei der dann folgenden Dekompression je nach der gewünschten Schnelligkeit, mit der diese stattfindet, eine mehr oder weniger große Druckflüssigkeitsmenge aus der Leitung 31 über das Ventil 30 in den Druckraum 24 strömen, wodurch über das Schließglied 50 eine Druckdifferenz auftritt. Gegen diese Druckdifferenz muß das Schließglied vom Aufstoßkolben 70 offengehalten werden. Dies wird aufgrund des großen Durchmessers des Kolbenbundes 71 mit Steuerdrücken erreicht, die heute üblicherweise mit Hydropumpen aufgebaut werden können.

## Patentansprüche

1. Entsperrbares Rückschlagventil für sehr hohe Systemdrücke mit einem Ventilgehäuse (35) mit einer in einer
Ventilachse (37) liegenden, durchgehenden Aufnahmebohrung (36), mit einem in Schließrichtung durch eine Schließfeder (51) vorgespannten und in Richtung der Ventilachse (37) bewegbaren Schließglied (50),
mit einem Aufstoßkolben (70), der zur Entsperrung des Schließgliedes (50) an einem Kolbenbund (71) mit einem Steuerdruck beaufschlagbar ist und beidseits des Kolbenbundes (71) an Endabschnitten (79, 80) von wenigstens annähernd gleichen Durchmessern in Richtung der Ventilachse (37) geführt ist,
und mit in die Aufnahmebohrung (36) eingebrachten Einsätzen (43, 55, 60), in die die Endabschnitte (79, 80) des Aufstoßkolbens (70) zu dessen axialen Führung oder zur Abdichtung der dem Systemdruck ausgesetzten Räume vor ihren Stirnseiten eintauchen,
**dadurch gekennzeichnet,**
**daß** die Aufnahmebohrung (36) im Bereich der Einsätze (43, 55, 60) und zwischen diesen im wesentlichen gleichen Durchmesser besitzt und daß axial zwiischen den Einsätzen (43, 55, 60) eine Abstandsbuchse (62) angeordnet ist, in der der Kolbenbund (71) zwei Ringräume (72, 73) zu seinen beiden Seiten fluidisch voneinander trennend bewegbar ist.

2. Entsperrbares Rückschlagventil nach Anspruch 1, **dadurch gekennzeichnet, daß** die beiden unmittelbar an den beiden Stirnseiten der Abstandsbuchse (62) anliegenden Einsätze (60) identisch zueinander ausgebildet sind.

3. Entsperrbares Rückschlagventil nach Anspruch 1 oder 2, **dadurch gekennzeichnet, daß** zumindest auf der einen Seite der Abstandsbuchse (62) zwei Einsätze (43, 60; 55, 60) angeordnet sind, daß die Trennfuge zwischen den beiden Einsätzen (43, 60; 55, 60) über einen Ringkanal (39, 42, 89) zwischen den Einsätzen (43, 60; 55, 60) und dem Ventilgehäuse (35) und eine Bohrung (90) im Ventilgehäuse (35) druckentlastet ist und daß der äußerste Einsatz (43, 44) der Einsätze auf der einen Seite der Abstandsbuchse (62) eine Kante oder Fläche (95) besitzt, die in der vorgesehenen Lage der Einsätze (43, 44, 55, 60) zu dem Ringkanal (39, 42, 89) bündig zu einer Stirnfläche (96) des Ventilgehäuses (35) liegt.

4. Entsperrbares Rückschlagventil nach Anspruch 3, **dadurch gekennzeichnet, daß** in der vorgesehenen Lage der Einsätze (43, 44, 55, 60) zum Ventilgehäuse (35) beide äußersten Einsätze (43, 44) jeweils mit einer Kante oder Fläche (95) bündig zu einer Stirnfläche (96) des Ventilgehäuses (35) liegen.

5. Entsperrbares Rückschlagventil nach einem vorhergehenden Anspruch, **dadurch gekennzeichnet, daß** ein an der Abstandsbuchse (62) anliegender, erster Einsatz (60) in einer Ringnut eine erste radial an einem Endabschnitt (79, 80) des Aufstoßkolbens (70) anliegende Dichtung (87) aufweist, daß ein dem ersten Einsatz (60) folgender, zweiter Einsatz (43, 55) in einer radial zu dem Endabschnitt (79, 80) des Aufstoßkolbens (70) und axial zum ersten Einsatz (60) hin offener Ausdrehung eine zweite radial am Endabschnitt (79, 80) des Aufstoßkolbens (70) anliegende Dichtung (86) aufweist, daß axial zwischen der, Ringnut und der dem zweiten Einsatz (43, 55) zugekehrten Stirnseite des ersten Einsatzes (60) in diesem ein zu dem Endabschnitt (79, 80) des Aufstoßkolbens (70) hin offener Ringkanal (91) ausgebildet ist, daß von diesem Ringkanal (91) durch den ersten Einsatz (60) hindurch eine Schrägbohrung (92) ausgeht, die in geringem radialen Abstand zu der Ausdrehung im zweiten Einsatz (43, 55) an der dem zweiten Einsatz (43, 55) zugekehrten Stirnseite des ersten Einsatzes (60) nach außen tritt, daß im Bereich des Austritts der Schrägbohrung (92) in der Trennfuge zwischen dem ersten Einsatz (60) und dem zweiten Einsatz (43, 55) ein Ringkanal (93) umläuft und daß mindestens ein zwischen den beiden Einsätzen (43, 60; 55, 60) ausgebildeter Verbindungskanal (94) vom Ringkanal (93) bis zum Außendurchmesser der beiden Einsätze (43, 60; 55, 60) verläuft und Leckageflüssigkeit abführt.

6. Entsperrbares Rückschlagventil nach einem vorhergehenden Anspruch, **dadurch gekennzeichnet, daß** die beiden Ringräume (72, 73) beidseits des Kolbenbundes (71) des Aufstoßkolbens (70) jeweils über einen Strömungspfad, in dem ein Ringkanal (40, 41) zwischen der Abstandsbuchse (62) und dem Ventilgehäuse (35) liegt, mit einem Anschluß (75, 77) am Ventilgehäuse (35) verbunden sind und daß axial zwischen den beiden Ringkanälen (40, 41) eine Dichtung (88) zwischen Abstandsbuchse (62) und Ventilgehäuse (35) angeordnet ist.

## Claims

1. A releasable check valve for very high system pressures having a valve housing (35) with a continuous receiving bore (36) located on a valve axis (37), having a closing element (50) which is prestressed in the closing direction by a closing spring (51) and can move in the direction of the valve axis (37), having a poppet piston (70) which can be acted upon at a piston collar (71) by a control pressure in order to release the closing element (50) and on both sides of the piston collar (71) is guided at end sections (79, 80) of at least approximately identical diameters in the direction of the valve axis (37), and having inserts (43, 55, 60) which are placed into the receiving bore (36) and into which the end sections (79, 80) of the poppet piston (70) dip in order to guide said piston axially or in order to seal the spaces before their end faces, which spaces are exposed to the system pressure, **characterized in that** the receiving bore (36) has essentially the same diameter in the region of the inserts (43, 55, 60) and between the latter, and **in that** a spacer bushing (62) is arranged axially between the inserts (43, 55, 60), in which bushing the piston collar (71) can move separating two annular spaces (72, 73) on both sides of it fluidically from each other.

2. A releasable check valve according to claim 1, **characterized in that** the two inserts (60) bearing directly against the two end faces of the spacer bushing (62) are formed identically to each other.

3. A releasable check valve according to claim 1 or 2, **characterized in that** two inserts (43, 60; 55, 60) are arranged at least on the one side of the spacer bushing (62), **in that** the separating gap- between the two inserts (43, 60; 55, 60) is relieved from pressure via an annular channel (39, 42, 89) between the inserts (43, 60; 55, 60) and the valve housing (35) and via a bore (90) in the valve housing (35), and **in that** the outermost insert (43, 44) of the inserts on the one side of the spacer bushing (62) has an edge or surface (95) which, in the designated position of the inserts (43, 44, 55, 60) with respect to the annular channel (39, 42, 89), lies flush with an end surface (96) of the valve housing (35).

4. A releasable check valve according to claim 3, **characterized in that** in the designated position of the inserts (43, 44, 55, 60) with respect to the valve housing (35) the two outermost inserts (43, 44) each lie with an edge or surface (95) flush with an end surface (96) of the valve housing (35).

5. A releasable check valve according to any of the preceding claims, **characterized in that** a first insert (60) bearing against the spacer bushing (62) has, in an annular groove, a first seal (87) bearing radially against an end section (79, 80) of the poppet piston (70), **in that** a second insert (43, 55) following the first insert (60) has, in a turn-out which is open radially with respect to the end section (79, 80) of the poppet piston (70) and axially toward the first: insert (80), a second seal (86) bearing radially against the end section (79, 80) of the poppet piston (70), **in that** axially between the annular groove and that end face of the first insert (60) which faces the second insert (43, 55) an annular channel (91) which is open toward the end section (79, 80) of the poppet: piston (70) is formed in said first insert, **in that** an oblique bore (92) passing through the first insert (60) originates from this annular channel (91) and, at a small, radial distance from the turn-out in the second insert (43, 55), exits to the outside at that end side of the first insert (60) which faces the second insert (43, 55), **in that** an annular channel (93) extends in the separating gap between the first insert (60) and the second insert (43, 55) in the region where the oblique bore (92) exits, and **in that** at least one connecting channel (94) formed between the two inserts (43, 60; 55, 60) runs from the annular channel (93) to the outside diameter of the two inserts (43, 60; 55, 60) and conducts away leakage fluid.

6. A releasable check valve according to any of the preceding claims, **characterized in that** the two annular spaces (72, 73) on both sides of the piston collar (71) of the poppet piston (70) are each connected to a connection (75, 77) on the valve housing (35) via a flow path, in which an annular channel (40, 41) lies between the spacer bushing (62) and the valve housing (35), and **in that** a seal (88) between the spacer bushing (62) and valve housing (35) is arranged axially between the two annular channels (40, 41).

## Revendications

1. Un clapet anti-retour déverrouillable pour des pressions de système très élevées, pourvu d'un corps (35) de valve,
doté d'un alésage (36) d'hébergement traversant, disposé dans un axe (37) de valve, doté d'un élément (50) de fermeture, qui est précontraint dans le sens de la fermeture par un ressort (51) de fermeture et qui peut bouger dans la direction de l'axe (37) de valve,
doté d'un piston (70) d'ouverture, qui pour le déverrouillage de l'élément (50) de fermeture peut être sollicité par une pression de commande au niveau d'une collerette (71) de piston et qui est guidé de part et d'autre de la collerette (71) de piston, au niveau d'extrémités (79, 80), dans la direction de l'axe (37) de valve, par des diamètres au moins approximativement identiques,
et doté de cartouches (43, 55, 60) insérées dans l'alésage (36) d'hébergement, dans lesquelles plongent les extrémités (79, 80) du piston (70) d'ouverture, pour guider celui-ci dans la direction axiale ou pour assurer l'étanchéité des chambres situées en amont de leurs faces et soumises à la pression du système,
**caractérisé en ce que**
l'alésage (36) d'hébergement possède un diamètre essentiellement invariable dans la zone des cartouches (43, 55, 60) et entre celles-ci et qu'entre les cartouches (43, 55, 60), dans la direction axiale, est disposée une douille (62) de distanciation, dans laquelle la collerette (71) de piston peut bouger en séparant l'une de l'autre, quant aux fluides, deux chambres (72, 73) annulaires, qui sont situées au niveau de ses deux faces.

2. Un clapet anti-retour déverrouillable selon la revendication n° 1, **caractérisé en ce que** les deux cartouches (60), qui viennent se plaquer immédiatement contre les deux faces de la douille (62) de distanciation, sont conçues de façon identique, l'une par rapport à l'autre.

3. Un clapet anti-retour déverrouillable selon la revendication n° 1 ou n° 2,
**caractérisé en ce que** deux cartouches (43, 60 ; 55, 60) sont disposées au moins sur l'une des faces de la douille (62) de distanciation, que les fentes de séparation entre les deux cartouches (43, 60 ; 55, 60) sont déchargées de toute pression au travers d'un canal (39, 42, 89) annulaire, disposé entre les cartouches (43, 60 ; 55, 60) et le corps (35) de valve, et d'un alésage (90) dans le corps (35) de valve et que la cartouche (43, 44) la plus externe des cartouches, de l'un des côtés de la douille (62) de distanciation, présente une arête ou une surface (95), qui est disposée au même niveau qu'une face (96) du corps (35) de valve, dans la position prévue des cartouches (43, 44, 55, 60) par rapport au canal (39, 42, 89) annulaire.

4. Un clapet anti-retour déverrouillable selon la revendication n° 3, **caractérisé en ce que** les deux cartouches (43, 44) les plus externes sont disposées chacune au même niveau qu'une face (96) du corps (35) de valve, de par une arête ou une surface (95), dans la position prévue des cartouches (43, 44, 55, 60) par rapport au corps (35) de valve.

5. Un clapet anti-retour déverrouillable selon une revendication précédente,
**caractérisé en ce qu'**une première cartouche (60), adjacente par rapport à la douille (62) de distanciation, présente dans une rainure annulaire un premier joint (87), qui est plaqué dans la direction radiale contre une extrémité (79, 80) du piston (70) d'ouverture, qu'une deuxième cartouche (43, 55), qui suit la première cartouche (60), présente un deuxième joint (86), qui est plaqué dans la direction radiale contre l'extrémité (79, 80) du piston (70) d'ouverture et qui est disposé dans un alésage ouvert sur l'extrémité (79, 80) du piston (70) d'ouverture dans la direction radiale et sur la première cartouche (60) dans la direction axiale, que dans la direction axiale, entre la rainure annulaire et la face orientée vers la deuxième cartouche (43, 55) de la première cartouche (60), dans cette dernière, est formé un canal (91) annulaire ouvert dans le sens de l'extrémité (79, 80) du piston (70) d'ouverture, qu'un alésage (92) en biais part de ce canal (91) annulaire et traverse la première cartouche (60), pour déboucher sur l'extérieur sur la face orientée vers la deuxième cartouche (43, 55) de la première cartouche (60), à une distance radiale faible de l'alésage dans la deuxième cartouche (43, 55), qu'un canal (93) annulaire fait le tour dans la zone de la débouchure de l'alésage (92) en biais, dans la fente de séparation entre la première cartouche (60) et la deuxième cartouche (43, 55), et qu'au moins un canal (94) de raccordement, formé entre les deux cartouches (43, 60 ; 55, 60), va du canal (93) annulaire jusqu'au diamètre extérieur des deux cartouches (43, 60 ; 55, 60) et évacue du fluide de fuite.

6. Un clapet anti-retour déverrouillable selon une revendication précédente,
**caractérisé en ce que** les deux chambres (72, 73) annulaires, disposées de part et d'autre de la collerette (71) de piston du piston (70) d'ouverture, sont reliées à un raccord (75, 77) au niveau du corps (35) de valve chacune par un cheminement de flux, dans lequel est disposé un canal (40, 41) annulaire entre la douille (62) de distanciation et le corps (35) de valve, et qu'un joint (88) est disposé entre la douille (62) de distanciation et le corps (35) de valve dans la direction axiale, entre les deux canaux (40, 41) annulaires.
